# EUROPEAN PATENT APPLICATION

(11) **EP 4 613 371 A1**
(43) Date of publication of application: **10.09.2025**
(21) Application number: 24161111.0
(22) Date of filing: 04.03.2024
(51) Int. Cl.: B01J 20/287, B01D 15/32, B01D 15/36, B01D 15/38, B01J 20/32

(54) **MIXED MODE CHROMATOGRAPHIC PACKING MATERIAL**

(71) Applicant: Dionex Softron GmbH, 82110 Germering (DE)
(72) Inventor: BAZIULYTE-PAULAVICIENE, Dovile, Vilnius (LT); JANSONS, Martins, Vilnius (LT); WILLIAMS, Richard, Hemel Hempstead (GB); DAMONSKIS, Matas, Vilnius (LT)
(74) Representative: Robinson, Louise Frances

(57) **Abstract**

The present invention relates to the field of chromatographic sample separation that includes liquid chromatography and solid phase extraction and, in particular, it relates to material and the synthesis of material for use as a stationary phase in chromatographic sample separation. The invention further relates to uses of the material, in particular in the separation of hydrophilic and hydrophobic peptides, non-glycosylated and N-linked glycosylated peptides, deamidated and oxidized peptides. The invention also relates to chromatographic columns and solid phase extraction columns containing the material as a stationary phase.

## Description

### Field of the Invention

The present invention relates to the field of chromatographic sample separation that includes liquid chromatography and solid phase extraction and, in particular, it relates to material and the synthesis of material for use as a stationary phase in chromatographic sample separation. The invention further relates to uses of the material, in particular in the separation of hydrophilic and hydrophobic peptides, non-glycosylated and N-linked glycosylated peptides, deamidated and oxidized peptides. The invention also relates to chromatographic columns and solid phase extraction columns containing the material as a stationary phase.

### Background of the Invention

Liquid chromatography (LC), e.g. HPLC and UHPLC, and solid phase extraction (SPE) are used routinely in both analytical and preparative chromatography applications for determination of the quality and quantity of analytes in a variety of samples. In these chromatographic techniques, separation of a sample comprising a mixture of components (also termed analytes) is achieved by conveying the sample in a liquid mobile phase through a stationary phase in a column, thereby causing the sample to separate into its components due to different partitioning between the mobile and stationary phases of each of the components (i.e. the components have different partition coefficients). The stationary phase is typically in the form of a bed of particles packed within the column, or in the form of a monolithic material held in the column. Silica particles are commonly used as the stationary phase, either as nonporous, fully porous or superficially porous particles. Silica based HPLC columns are used for a broad range of applications because of their excellent physical strength, high efficiency and mature surface bonding chemistry.

The selectivity of a stationary phase for analytes is mainly governed by the column chemistry, which is key in LC separation. The column chemistry is routinely controlled by modifying the surface of the stationary phase, commonly by bonding compounds to the surface. The introduction of various functional groups onto the stationary phase surface enables the implementation of mixed-mode chromatography, where multiple separation mechanisms can be employed simultaneously.

However, silica-based columns have pH limitations. Under acidic conditions, the bonded compounds can be cleaved at the siloxane (Si-O-Si) linkage between the silica surface and the compound, resulting in loss of hydrophobic retention in the case of a C₁₈ bonded column. Additionally, silica particles are susceptible to dissolution at low pH, leading to the loss of chromatographic performance and reduced column lifetime. Under alkaline conditions, the hydroxide ions can erode the silica substrate by destroying the siloxane linkages in the silica backbone, causing the collapse of the packed bed or headspace (void) in the column.

Stationary phase media for HPLC separations are commonly produced by modifying a silica surface with silylating agents. Monofunctional silylating agents are often used to form monolayer surface coatings, while di- and tri-functional silylating agents are used to form polymeric coatings on silica surfaces generally resulting in improved chemical stability (GB Pat. No. 2,549,417). However, the use of some silylating agents results in coatings with undesirable properties including instability to hydrolysis and inadequate masking of acidic silanols on silica surfaces.

The presence of acidic silanols on the surface of silica particles has been a known challenge in LC. This is because acidic silanols can cause irreversible adsorption of basic solutes, resulting in strong peak asymmetry and a significant dependence of retention time on solute concentration. To mitigate this issue, end-capping techniques using activated silanes such as hexamethyldisilazane or bis-trimethylsilylacetamide have been employed to improve the behaviour of bonded phases (US Pat. No. 5,134,110, US Pat. No.7,534,352). However, this approach is primarily applicable to RP materials and presents a limitation when introducing polar functional groups for different selectivity in mixed-mode stationary phases, as these groups can react with the end-capping silanes, compromising the stability and performance of the stationary phase.

C18 HPLC columns are predominantly used for in RP HPLC, where the primary interaction between the stationary phase and analyte is hydrophobic interactions, arising from dispersion forces.

Secondary interactions of C18 phases without end-capping involve hydrophilic interactions between residual silanol groups and analyte.

Conventional C18 columns are well known in the art and are designed to achieve separation based on specific requirements, altering product characteristics such as: 1) particle's pore size: smaller pore sizes (e.g.: 80Å) are suitable for smaller molecules, while bigger pore sizes (e.g.: 300Å) are more suitable for larger molecules; 2) particle's surface area: higher surface area leads to higher retention; 3) particle size: smaller particles (e.g.: 1.5µm) leads to higher separation efficiency, while bigger particles (e.g.: 5µm) results in lower column backpressure; 4) column dimensions: longer columns (e.g.: 20cm length) provides better separation and resolution, while shorter columns (e.g.: 5cm length) enables faster separation and analysis; 5) specific end-capping is employed to reduce silanol activity and increase particle stability.

Conventional C18 columns find extensive applications in various industries such as pharmaceuticals, environmental analysis, food analysis, and others. C18 phase is commonly used for the analysis of small molecules, peptides, proteins and other compounds of interest.

However, while conventional C18 columns are effective in separating non-polar and moderately polar compounds, they possess limited selectivity towards highly polar and ionic compounds and their sample mixtures. This limitation necessitates considering new paths towards enhanced separation and resolution of analytes of interest such as alternative chemistries, mixed-mode approaches, or implementation of multi-dimensional LC techniques. One of particular area is proteomics and peptide analysis where a combination of hydrophobic and ion-exchange interactions can be utilized for improved separation and resolution.

Hybrid materials can address some chromatographic challenges, including improved stability at both high and low pH levels (US Pat. No.9,120,083). However, when the testing environment changes, hybrid materials have a tendency to show a drift in retention time, leading to poor peak shape for bases at low pH, that negatively affects loadability and peak capacity. Moreover, the presence of surface organic groups, particularly methyl groups, leads to lower concentrations of the bonded phase on the surface, thereby impairing the efficiency of chromatographic separation.

Therefore, while end-capping technique and hybrid materials have proven to be beneficial for improving the characteristics of LC stationary phases, the application of mixed-mode chromatographic separation are constrained. Innovative approaches are required to overcome these limitations and develop a pH stable and efficient mixed-mode stationary phase that offers enhanced selectivity, good peak shape and versatility [for charged analytes] while maintaining the integrity of the surface modification.

The listing or discussion of an apparently prior-published document in this specification should not necessarily be taken as an acknowledgement that the document is part of the state of the art or is common general knowledge.

### Description of the Invention

The present invention provides a method for making chromatographic packing material, wherein the packing material comprises a functionalised silicone-based polymer layer bonded to substrate particles and the method for forming the packing material comprises:
(a)
   (i) forming silicone-based polymer encapsulated substrate particles comprising pendant functional groups by reacting functional groups on the substrate particles with a silicone-based polymer product comprising pendant functional groups; and
   (ii) functionalising the silicone-based polymer encapsulated substrate particles by reacting the pendant functional groups on the silicone-based polymer encapsulated substrate particles with at least one hydrophobic compound and at least one amine containing compound (to form the functionalised silicone-based polymer bonded to the substrate particles); or
(b)
   (i) forming a functionalised silicone-based polymer by reacting pendant functional groups on a silicone-based polymer product with at least one hydrophobic compound and at least one amine containing compound; and
   (ii) reacting the product of step b (i) with functional groups on the substrate particles.

The substrate particles as defined herein, may be a particulate or monolithic substrate, preferably particulate.

The substrate material may be a metal oxide (which term herein includes a metalloid oxide, such as silica for example, and includes an inorganic-organic hybrid material (especially a metal oxide-organic hybrid material), as described in WO 00/45951 for example). The substrate may, in particular, be silica (SiOz), which term herein includes a silica/organo hybrid, alumina (Al₂ Os), titania (TiO₂), or zirconia (ZrOz) substrate.

A silica (which term herein includes a silica/organo hybrid) substrate is most preferred.

The term "silicone-based" as used herein, is intended to cover any polymers and/or compounds that comprise silicone.

The term "functionalised silicone-based polymer layer" as used herein, is intended to cover a silicone-based polymer product to which additional compounds have been added which alter the functionality of the polymer. In particular, compounds such as hydrophobic compounds and amine containing compounds and compounds that provide further polymerisation.

The term "pendant" as used herein, is as defined in IUPAC nomenclature of chemistry, namely, a pendant group (sometimes spelled pendent) is a group of atoms attached to a backbone chain of a long molecule, usually a polymer. Pendant groups are different from pendant chains, as they are neither oligomeric nor polymeric.

The additional compounds may be single compounds or may themselves be monomers which either before or after addition to the silicone-based polymer layer form an additional polymeric layer bound to the silicone-based polymer. This is discussed in more detail below.

The functionalised silicone-based polymer layer is bound to the substrate particles. Typically, the functionalised silicone-based polymer layer is bound to the surface of the substrate particles, preferable through covalent bonds, i.e. the functionalised silicone-based polymer layer is covalently bonded to the substrate particles.

The functionalised silicone-based polymer bound to substrate particles may be formed by either step (a) or step (b) in the method of the invention.

In step (a) (i), silicone-based polymer encapsulated substrate particles comprising pendant functional groups are formed by reacting functional groups on the substrate particles (as previously defined above) with a silicone-based polymer product comprising pendant functional groups.

Typically, the reaction between the functional groups on the substrate particles with a silicone-based polymer product comprising pendant functional groups forms a covalent bond.

The functional groups on the substrate particles may preferably be selected from hydroxyl, epoxy and thiol. In a most preferred aspect, the functional groups are hydroxyl groups.

The functional groups on the substrate particles (that are reacted with the silicone-based polymer product comprising pendant functional groups) are typically located on the surface of the substrate particles. For example, the silicone-based polymer product comprising pendant functional groups may be reacted with functional groups, i.e. hydroxyl groups, on the surface of the substrate particles.

The silicone-based polymer product preferably comprises and utilises a silyl group or groups for attaching the polymer to the substrate (especially silica substrate). The silyl group accordingly is preferably an activated silyl group, i.e. having groups (leaving groups) that can react with a substrate (especially silica) surface and enable attachment of the polymer to the substrate surface. The silyl groups in this way may covalently bond the polymer to the silica substrate via siloxane bonds (Si-O-Si). A first Si atom in the siloxane bond is derived from the silyl group. A second Si atom in the siloxane bond is derived from the silica, i.e. the silica surface.

The silyl group or groups of the polymer molecules may preferably have a formula: 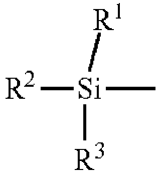 wherein at least one of R¹, R², R³ is a leaving group. Preferably, R¹, R², R³ are independently selected from an oxygen atom (e.g. that connects to a substrate (silicon) atom in the substrate or connects to another silicon atom of the polymer), a hydroxyl group, a halogen atom, an alkoxy group (i.e. methoxy, ethoxy, etc), a dialkylamino group, an acyl group, an alkyl group (optionally a heteroalkyl group or a heterocycloalkyl group), an aryl group (optionally a heteroaryl group), or a pendant functional group (reactive group) (i.e. the first reactive group described herein, for example an olefinic group, such as vinyl, allyl etc.).

The groups R¹, R², and R³ may be the same or all different. Preferably, at least one, optionally two of R¹, R², R³ groups is a leaving group. More preferably, at least one of R¹, R², R³ groups is an alkoxy group (preferably methoxy, ethoxy or propoxy, especially methoxy), a dialkylamino group, or a halogen atom.

The silicone-based polymer product also comprises multiple pendant functional groups, also referred to hereinafter as first reactive groups.

The pendant functional groups (first reactive groups) may preferably be reactive olefinic groups or reactive thiol groups, especially olefinic groups. The reactive olefinic groups of the polymer may preferably be vinyl or allyl groups. The multiple reactive groups may preferably be all of the same type, e.g. all vinyl.

The pendant functional groups may be groups that are capable of participating in a radical polymerisation reaction. For example, the pendant functional groups capable of participating in a radical polymerisation reaction may be vinyl, allyl, methacrylate, acrylate, acrylamide, methacrylamide and styrene groups, preferably vinyl groups.

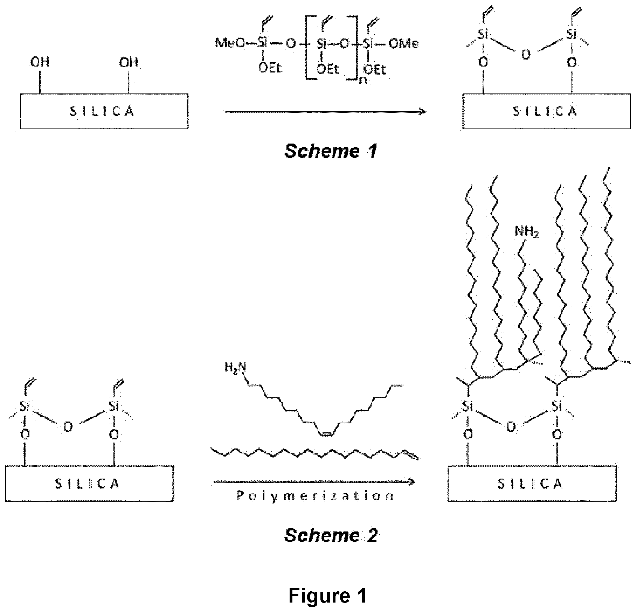

The polymer may preferably have a "fixed" distance between adjacent first reactive groups (e.g. between adjacent vinyl groups), i.e. the distance between adjacent first reactive groups is substantially uniform for all the reactive groups in the polymer molecule. For example, homopolymer 1 of scheme 1 of Figure 1 has a repeating 3 atoms interval in between the first reactive groups (e.g., vinyl groups).The silicone-based polymer product may preferably comprise a vinyl siloxane polymer, (i.e. a siloxane polymer having reactive vinyl groups). The size (i.e. number average molecular weight, MWn) of the (optionally vinyl) siloxane polymer is preferably 500-10,000 daltons (Da). The vinyl siloxane polymer is preferably a vinylalkoxysiloxane polymer.

In the case of vinylsiloxane polymers, typically the silyl group has a leaving group (terminal silyl groups may have two leaving groups), a reactive group and two bonds (terminal silyl groups have one such bond) to respective oxygen atoms that are connected to adjacent silicon atoms of the polymer). The leaving groups are capable of allowing the polymer to form the siloxane bonds to the substrate silica surface.

The vinyl siloxane polymer may have a formula I: 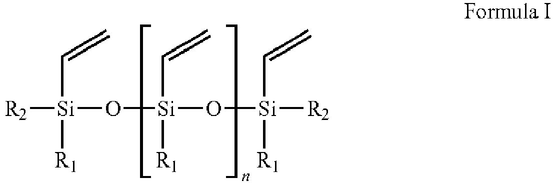 wherein n is an integer from 3 to 100 R₁, and R₂ are independently selected from alkoxy, especially methoxy and ethoxy, hydroxyl and halo (especially CI). R₁ and R₂ are preferably independently selected from alkoxy, especially methoxy and ethoxy, and hydroxyl. R₁ and R₂ are more preferably independently selected from alkoxy, especially methoxy and ethoxy. R₁ and R₂ are especially preferably the same, preferably both either methoxy or ethoxy.

Alternatively, the vinyl siloxane polymer may have a formula II:

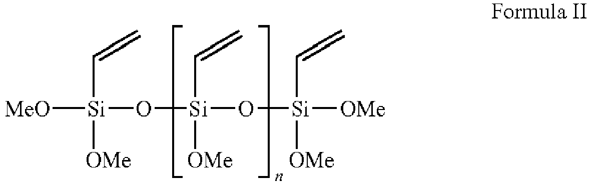

Alternatively, the silicone-based polymer product may have ethoxy groups, or hydroxyl groups, in place of the methoxy groups in formula II.

The silicone-based polymer product (such as a vinyl siloxane polymer) may be a co-polymer, e.g. containing a mixture of vinyl siloxane units and alkyl siloxane units (especially C₁-C₄ alkyl). The co-polymer may have a nominal formula III for example: 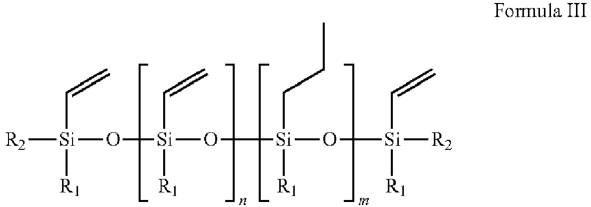 wherein R₁, and R₂ are defined as above for formulae I and II and wherein n is an integer from 3 to 100 and m is an integer from 1 to 70 (preferably 1 to 20), or formula IV for example.

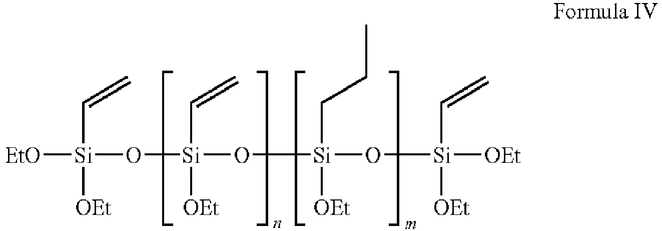

The vinyl siloxane units and the alkyl siloxane units in the above formula may be present in the polymer as blocks, or randomly distributed, or in alternating positions. Alternatively, the polymer may have methoxy groups, or hydroxyl groups, in place of the ethoxy groups in formula IV.

The silicone-based polymer product may comprise at least one silyl group containing polymer (i.e. at least one polymer containing multiple silyl groups), preferably having 500-10,000 dalton MWn. In particular, such polymer may be modified polybutadiene, especially silyl modified polybutadiene, preferably having 500-10,000 dalton MWn.

The silicone-based polymer product may preferably comprise trialkoxysilyl groups as the silyl groups (e.g. trimethoxysilyl or triethoxysilyl). The at least one silyl modified polybutadiene may preferably comprise a trialkoxysilyl modified polybutadiene (the size of the trialkoxysilyl modified polybutadiene polymer (i.e. molecular weight, MWn) is preferably 500-10,000 dalton). For example, the polybutadiene may be a trimethoxysilyl modified polybutadiene or a triethoxysilyl modified polybutadiene.

The silyl modified polybutadiene may have a nominal repeat unit of formula V: 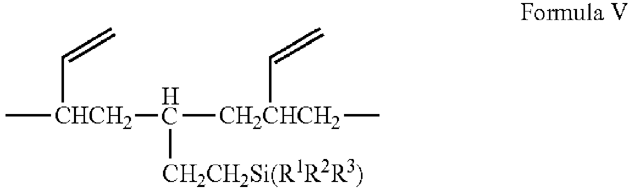 wherein R¹, R² and R³ are independently selected from alkoxy, especially methoxy and ethoxy, hydroxyl, halo (especially CI) and alkyl (especially C₁-C₃ alkyl, more especially methyl), provided that at least one of R¹, R² and R³ is a leaving group (especially methoxy or ethoxy). R¹, R² and R³ are preferably independently selected from alkoxy, especially methoxy and ethoxy, and hydroxyl. R¹, R² and R³ are more preferably independently selected from alkoxy, especially methoxy and ethoxy R¹, R² and R³ are especially preferably the same, preferably both either methoxy or ethoxy.

The silyl modified polybutadiene may be an alkoxysilyl modified polybutadiene having a nominal repeat unit of formula VI: 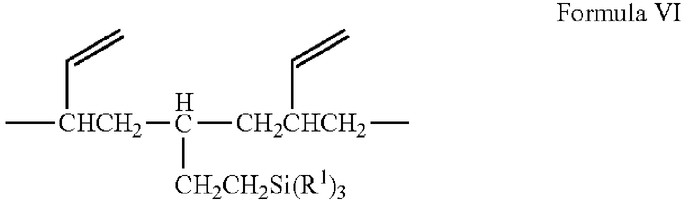 wherein each R¹ is independently either methoxy or ethoxy. Preferably all R¹ are the same group.

For example:

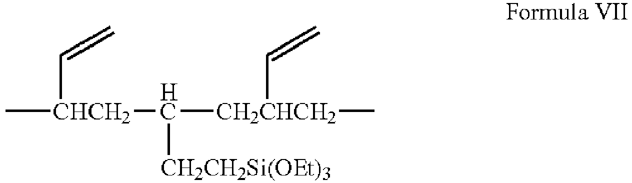

Alternatively, the polymer may have methoxy groups, or hydroxyl groups, in place of the ethoxy groups in formula VII.

In another preferred embodiment, the silyl modified polybutadiene may be an alkylalkoxysilyl modified polybutadiene. For example, the alkylalkoxysilyl modified polybutadiene may have a nominal repeat unit of formula VIII:

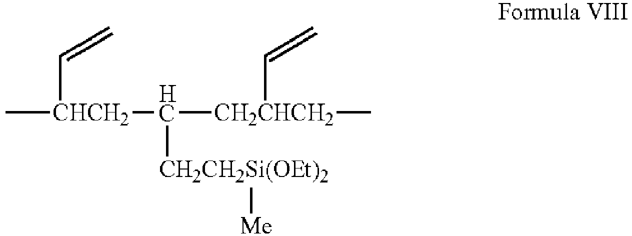

Alternatively, the polymer may have methoxy groups, or hydroxyl groups, in place of the ethoxy groups in formula VIII.

After reaction with functional groups on the substrate particles, such as the surface of the substrate particles (i.e. step (a) (i), the silicone-based polymer product now encapsulates the substrate particles forming the silicone-based polymer encapsulated substrate particles comprising pendant functional groups.

An example of the surface bound silicone-based polymeric layer formed from polymer of formula I or II (having methoxy or ethoxy groups), wherein vinyl reactive groups (vinyl pendant functional groups) are present is shown below:

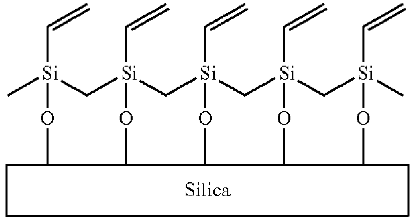

In the formula I or II, any number of the vinyl groups may be replaced by alkyl groups, e.g. C₁-C₄ alkyl, especially C₁-C₃ alkyl.

A covalent attachment of the polymer of formula V, VI or VII to silica may yield a silicone-based polymer encapsulated substrate particles comprising pendant functional groups where the silicone-based polymer product is bound to the surface as show:

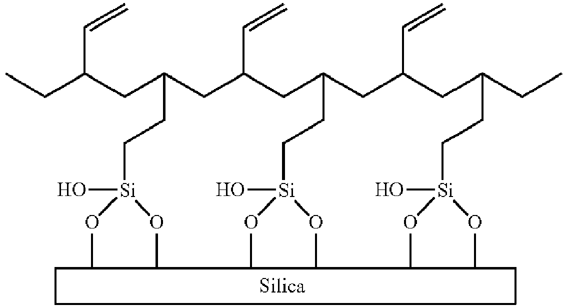

A covalent attachment of the polymer of formula VIII may yield a silicone-based polymer encapsulated substrate particles comprising pendant functional groups where the silicone-based polymer product is bound to the surface as show:

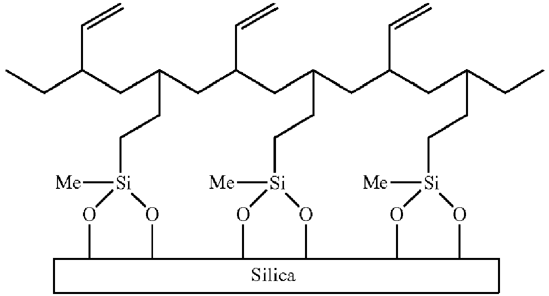

The use of the polymers described herein provide numerous benefits, for example: allowing multiple attachment to the substrate for stability whilst being controllable compared to very high MW polymers that may tend to clog pores in the substrate; allowing for subsequent surface modification with copolymerization of allyl or vinyl functional compounds, wherein a "fixed" distance between adjacent reactive (e.g. vinyl) groups favours the formation of a more uniform protective layer on the substrate surface; and allowing flexibility in the stationary phase or column chemistry due to a choice of functional groups for attaching to the polymer.

After formation of the silicone-based polymer encapsulated substrate particles comprising pendant functional groups as detailed above in Step (a) (i), the encapsulated particles are then further reacted in Step (a) (ii) in order to functionalise the silicone-based polymer layer.

In Step (a) (ii), this is achieved by reacting the pendant functional groups on the silicone-based polymer encapsulated particles with at least one hydrophobic compound and at least one amine containing compound.

After Step (a) (i), pendant functional groups are located on the surface of the silicone-based polymer encapsulated substrate particles, that is in Step (a) (ii), functionalising the silicone-based polymer encapsulated substrate particles may comprise reacting pendant functional groups located on the surface of the silicone-based polymer encapsulated substrate particles with at least one hydrophobic compound and at least one amine containing compound.

This helps to provide fuller coverage of the substrate particle surface with reactive groups.

The at least one hydrophobic compound typically comprises at least one group that is reactive with the pendant functional groups on the silicone-based polymer encapsulated substrate particles, for example, the at least one hydrophobic compound may comprise one, two or three groups that are reactive with the pendant functional groups located on the silicone-based polymer encapsulated substrate particles. The group may be selected from the group consisting of a vinyl group, an allyl group and/or a thiol group.

In a preferred aspect, the at least one hydrophobic compound may be a branched or unbranched C₄ to C₃₀ alkyl. In an aspect of the invention, the at least one branched or unbranched C₄ to C₃₀ alkyl may be monounsaturated, i.e. comprise a double bond. For example, the at least one branched or unbranched C₄ to C₃₀ alkyl may preferably comprise a terminal double bond (vinyl group). In a preferred aspect, the C₄ to C₃₀ alkyl is unbranched and monounsaturated, in particular where the monounsaturation is terminal (i.e. vinyl).

Examples of the at least one hydrophobic compound include, but are not limited to regio-isomers of butene, pentene, hexene, octene, nonene, decene, undecene, dodecene, tridecene, tetradecene, pentadecene, hexadecene, heptadecene, octadecene, nonadecene, Eicosene, Heneicosene, docosene, tricosene, tetracosene, pentacosene, hexacosene, heptacosene, octocosene, nonacosene and tricontene, such as 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-Eicosene, 1-Heneicosene, 1-docosene, 1-tricosene, 1-tetracosene, 1-pentacosene, 1-hexacosene, 1-heptacosene, 1-octocosene, 1-nonacosene and 1-tricontene.

The at least one amine containing compound may comprise at least one amino group selected from ammonia, primary amine, secondary amine, tertiary amine and quaternary amine groups.

In an aspect of the invention, the at least one amine containing compound may be a branched or unbranched C₄ to C₃₀ alkyl substituted with at least one amino group selected from ammonia, primary amine, secondary amine, tertiary amine and quaternary amine groups. The at least one amine containing compound may also be monounsaturated, that is the at least one amine containing compound may be a monounsaturated, branched or unbranched C₄ to C₃₀ alkyl substituted with at least one amino group selected from ammonia, primary amine, secondary amine, tertiary amine and quaternary amine groups. In a particular aspect, the at least one amine containing compound may be a monounsaturated, unbranched C₄ to C₃₀ alkyl substituted with at least one amino group selected from ammonia, primary amine, secondary amine, tertiary amine and quaternary amine groups.

The amine containing compound may preferably have the formula:

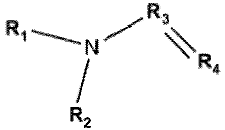

Where each occurrence of R₁, R₂, independently represents hydrogen, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl. R₃ represents C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy. R₄ represents hydrogen, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl.

In a preferred aspect, the amine containing compound may have the formula:

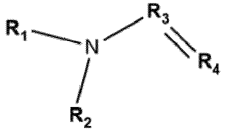

Where each occurrence of R₁, and R₂, are hydrogen, R₃ represents C₁-C₁₈ alkyl, R₄ represents C₁-C₁₈ alkyl.

For example, the amine containing compound may preferably be oleylamine.

The at least one hydrophobic compound and at least one amine containing compound may react with the pendant functional groups in a radical polymerisation reaction forming an additional polymeric layer bonded to the silicone-based polymer layer.

As noted previously, the reaction between the pendant functional groups on the silicone-based polymer encapsulated substrate particles formed in step (a) (i) and the at least one hydrophobic compound and at least one amine containing compound may form an additional polymer layer bonded to the silicone-based polymer encapsulated substrate particles. This may also be referred to hereinafter as the additional polymer layer or further polymer layer.

Thus, step (a) (ii) may include functionalising the silicone-based polymer encapsulated substrate particles by forming an additional (or further) polymer layer by reacting the pendant functional groups on the silicone-based polymer encapsulated substrate particles with at least one hydrophobic compound and at least one amine containing compound in a radical polymerisation reaction.

Alternatively, step (a) (ii) may include encapsulating the silicone-based polymer encapsulated substrate particles by reacting the pendant functional groups on the silicone-based polymer encapsulated substrate particles with at least one hydrophobic compound and at least one amine containing compound in a radical polymerisation reaction.

Step (a) (i) of the method of the invention may typically be performed at a temperature of from about 20° C to about 250° C, preferably from about 100° C to about 225° C, such as about 200° C.

Typically, step (a) (i) of the method may be conducted from about 2 to about 72 hours, preferably from about 24 to about 64 hours, such as about 48 hours.

Step (a) (i) may be conducted in the presence of a solvent. The solvent may preferably be a water immiscible organic solvent such as toluene, ethylbenzene, dimethylbenzene, n-hexane, n-heptane, n-pentane, n-octane, or cyclohexane. The solvent may preferably be toluene.

Alternatively, step (a) (i) of the method may be conducted under reduced pressure, such as below 500 mbar.

Where step (a) (i) is conducted at a reduced pressure, it may be preferred that the step is conducted in the absence of solvent.

Step (a) (ii) of the method of the invention may also preferably be conducted under elevated temperature and/or reduced pressure in the absence of solvent.

It may be preferred that step (a) (ii) is conducted in the presence of an initiator to promote free radical polymerisation.

The elevated temperature for step (a) (ii) may preferably be at least about 100 ° C, or at least about 110 ° C, or at least about 120 ° C, or at least about 140 ° C. For example, the elevated temperature for step (a) (ii) may be up to about 300 ° C, or up to about 200 ° C, or up to about 190 °C, or up to about 180 ° C, or up to about 160 ° C.

More preferably, the elevated temperature for step (a) (ii) may be from about 100 ° C to about 300 ° C, or from about 100 ° C to about 200 ° C, or from about 110 ° C to about 190 ° C, or from about 120 ° C to about 180 ° C, or from about 130 ° C to about 170 ° C.

The reduced pressure for step (a) (i) or (ii) when used may be preferably less than 500 mbar, more preferably less than 400 mbar, still more preferably less than 300 mbar, yet still more preferably less than 200 mbar, and most preferably less than 100 mbar.

For example, the pressure may be preferably at least 0.01 mbar, more preferably at least 0.1 mbar, or at least 1 mbar.

The reduced pressure and the elevated temperature for step (a) (i) or (ii) when used may be preferably applied concurrently at least for a period of time (first reactions period).

This period of time may be at least 1 hour, or at least 2 hours, or at least 4 hours, or at least 8 hours, or at least 12 hours. The period of time may be up to 20 hours, or up to 30 hours.

The reduced pressure is preferably applied for substantially the same period as the elevated temperature.

Both step (a) (i) and (ii) may be preferably performed in an inert atmosphere, i.e. in an inert gas (e.g. nitrogen, or argon). The reactants are preferably purged with inert gas before applying the elevated temperature and, in the case of reaction at reduced pressure, before the procedure.

As detailed above, the functionalised silicone-based polymer bound to substrate particles may be formed the either step (a) or step (b) in the method of the invention.

In step (b) (i), a functionalised silicone-based polymer is formed by reacting pendant functional groups on a silicone-based polymer product with at least one hydrophobic ligand and at least one amine containing ligand.

Performing Step (b) (i) forms a functionalised silicone-based polymer before the substrate particles are encapsulated.

As with Step (a) (ii) above, the reaction between the pendant functional groups on the silicone-based polymer product in step (b) (i) and the at least one hydrophobic compound and at least one amine containing compound may form an additional polymer layer bonded to the silicone-based polymer product. This may also be referred to hereinafter as the additional polymer layer.

That is step (b) (i) may comprise reacting the pendant functional groups on the silicone-based polymer product with at least one hydrophobic compound and at least one amine containing compound in a radical polymerisation reaction.

Thus, step (b) (i) may include functionalising the silicone-based polymer product by forming an additional (or further) polymer layer by reacting the pendant functional groups on the silicone-based polymer encapsulated substrate particles with at least one hydrophobic compound and at least one amine containing compound in a radical polymerisation reaction.

Encapsulating the substrate particles occurs in Step (b) (ii) where the functionalised silicone-based polymer (i.e. the product of Step (b) (i)) is reacted with functional groups on the substrate particles.

The functional groups on the substrate particles, the substrate particles, the silicone-based polymer product, the pendant functional groups on the silicone-based polymer product, the at least one hydrophobic ligand and the at least one amine containing ligand are as defined for Step (a) above.

As with Step (a) (i) and (ii) above, step (b) (i) or (ii) may be conducted at the elevated temperatures and/or reduced pressures previously defined.

Typically, in either Step (a) (ii) or Step (b) (i), the ratio of the at least one hydrophobic compound and the at least one amine containing compound is from about 0:1 to about 50:1, such as from about 2:1 to about 8:1, such as about 4:1.

It should be noted that in any of the polymerisation reaction, any suitable polymerisation reagent may be used. The reagent will depend on the compounds present and the skilled person would be able to ascertain which would be most suitable.

In a preferred aspect, in the method for making chromatographic packing material, wherein the packing material comprises a functionalised silicone-based polymer layer bonded to substrate particles, the method for forming the packing material may comprise:
(a)
   (i) forming silicone-based polymer encapsulated substrate particles comprising pendant functional groups by reacting hydroxyl, epoxy and/or thiol functional groups on the substrate particles with a silicone-based-based polymer product comprising pendant functional groups, wherein the silicone-based polymer product is a vinylsiloxane with the formula 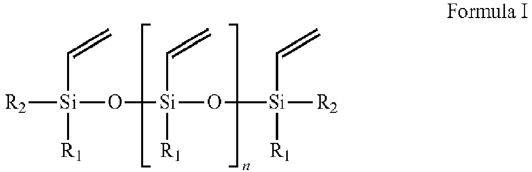 wherein n is an integer from 3 to 100, R₁ and R₂ are independently selected from the group consisting of: alkoxy, hydroxyl and halo; and
   (ii) functionalising the silicone-based polymer encapsulated substrate particles by reacting the pendant vinyl functional groups on the silicone-based polymer encapsulated substrate particles with at least one monounsaturated, unbranched C₄ to C₃₀ alkyl compound and at least one monounsaturated, unbranched C₄ to C₃₀ alkyl substituted with at least one amino group selected from ammonia, primary amine, secondary amine, tertiary amine and quaternary amine groups; or
(b)
   (i) forming a functionalised silicone-based polymer by reacting pendant vinyl functional groups on a silicone-based polymer product, wherein the silicone-based polymer product is a vinylsiloxane with the formula 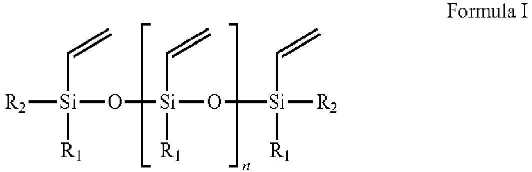 wherein n is an integer from 3 to 100, R₁ and R₂ are independently selected from the group consisting of: alkoxy, hydroxyl and halo with at least one monounsaturated, unbranched C₄ to C₃₀ alkyl compound and at least one monounsaturated, unbranched C₄ to C₃₀ alkyl substituted with at least one amino group selected from ammonia, primary amine, secondary amine, tertiary amine and quaternary amine groups; and (ii) reacting the product of step b (i) with hydroxyl, epoxy and/or thiol functional groups on the substrate particles.

The resulting chromatographic packing material is provided in a form suitable for use as chromatographic packing.

Thus, the present invention also provides chromatographic packing material formed by the method of the invention as defined above.

The present invention also provides chromatographic packing material comprising:
(i) Substrate particles;
(ii) A functionalised silicone-based polymer layer, bonded to the substrate particles, prepared by:
   (a)
      (i) forming silicone-based polymer encapsulated substrate particles comprising pendant functional groups by reacting functional groups on the substrate particles with a silicone-based-based polymer product comprising pendant functional groups; and
      (ii) functionalising the silicone-based polymer encapsulated substrate particles by reacting the pendant functional groups on the silicone-based polymer encapsulated substrate particles with at least one hydrophobic compound and at least one amine containing compound; or
   (b)
      (i) forming a functionalised silicone-based polymer by reacting pendant functional groups on a silicone-based polymer product with at least one hydrophobic compound and at least one amine containing compound; and
      (ii) reacting the product of step b (i) with functional groups on the substrate particles.

This may hereinafter be referred to as the chromatographic packing material of the invention or the packing material of the invention.

In the packing material of the invention, the bond between the functionalised silicone-based polymer and the substrate particles may be a covalent bond.

As detailed above with regards the method of the invention, this is because the bond may typically be formed by reaction between a hydroxyl, epoxy and/or thiol functional group on the substrate particles (for example, the surface of the substrate particles) and a leaving group, such as an alkoxy group present on the silicone-based polymer product.

The functional groups on the substrate particles, the substrate particles, the silicone-based polymer product, the pendant functional groups on the silicone-based polymer product, the at least one hydrophobic ligand and the at least one amine containing ligand are as defined for the method of the invention above.

In an aspect of the packing material of the invention, the ratio of the at least one hydrophobic compound and the at least one amine containing compound present in the packing material may be from about 0:1 to about 50:1, such as from about 2:1 to about 8:1, such as about 4:1.

In a preferred aspect, the present invention provides chromatographic packing material comprising:
(i) Metal oxide or organic polymer substrate particles, preferably silica substrate particles, comprising hydroxyl, epoxy and/or thiol functional groups;
(ii) A functionalised silicone-based polymer layer, covalently bonded to the substrate particles, prepared by:
   (c)
      (i) forming silicone-based polymer encapsulated substrate particles comprising pendant functional groups by reacting hydroxyl, epoxy and/or thiol functional groups on the substrate particles with a silicone-based-based polymer product comprising pendant functional groups, wherein the silicone-based polymer product is a vinylsiloxane with the formula 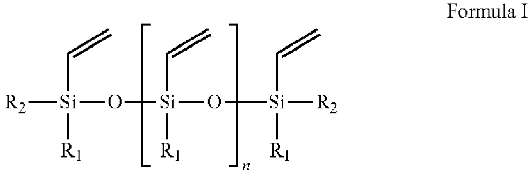 wherein n is an integer from 3 to 100, R₁ and R₂ are independently selected from the group consisting of: alkoxy, hydroxyl and halo; and
      (ii) functionalising the silicone-based polymer encapsulated substrate particles by reacting the pendant vinyl functional groups on the silicone-based polymer encapsulated substrate particles with at least one monounsaturated, unbranched C₄ to C₃₀ alkyl compound and at least one monounsaturated, unbranched C₄ to C₃₀ alkyl substituted with at least one amino group selected from ammonia, primary amine, secondary amine, tertiary amine and quaternary amine groups; or
   (d)
      (i) forming a functionalised silicone-based polymer by reacting pendant vinyl functional groups on a silicone-based polymer product, wherein the silicone-based polymer product is a vinylsiloxane with the formula 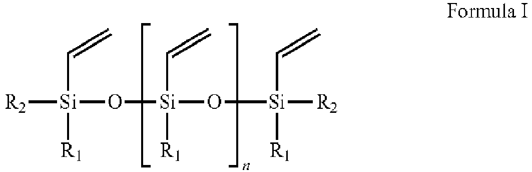 wherein n is an integer from 3 to 100, R₁ and R₂ are independently selected from the group consisting of: alkoxy, hydroxyl and halo with at least one monounsaturated, unbranched C₄ to C₃₀ alkyl compound and at least one monounsaturated, unbranched C₄ to C₃₀ alkyl substituted with at least one amino group selected from ammonia, primary amine, secondary amine, tertiary amine and quaternary amine groups; and
      (ii) reacting the product of step b (i) with hydroxyl, epoxy and/or thiol functional groups on the substrate particles.

In a particular aspect, the packing material may be obtained using a method as defined herein.

The packing material of the invention may be used in chromatographic separation.

The specific combination of at least one hydrophobic compound and at least one amine containing compound in the additional polymer layer has surprisingly and unexpectedly been shown to provide particularly effective hydrophobic retention and ion exchange selectivity, with exceptional selectivity for glycosylated and deaminated peptides. As well as providing protection against low pH and acidic aqueous mobile phases.

Thus, the present invention also provides the use of packing material as defined herein in chromatographic separation, in particular, the separation of glycopeptides.

In an aspect of the invention, the use in chromatographic separation may be preferred when conducted using a mobile phase with a pH 1.0 or less or conducted using a mobile phase with a pH 13.0 or more.

For example, the use in the separation of glycopeptides using a mobile phase with a pH 1.0 or less or using a mobile phase with a pH 13.0 or more.

In view of the above, the present invention also provides a chromatographic separation device comprising the packing material as defined above, preferably wherein the packing material has been obtained using the methods also defined above.

For the avoidance of doubt, in this specification when we use the term "comprising" or "comprises" we mean that the feature being described must contain the listed component(s) but may optionally contain additional components. When we use the term "consisting essentially of' or "consists essentially of' we mean that the feature being described must contain the listed component(s) and may also contain other components provided that any components do not affect the essential properties of the feature. When we use the term "consisting of' or "consists of' we mean that the feature being described must contain the listed component(s) only.

As used herein, the term "at least one" is intended to mean that the compound comprises one or more of the features referred to. In particular, one, two, three or four of the features referred to, from one to four or from one to three.

It would be clear to the person skilled in the art that the features and combinations defined with respect to the method of the invention, apply equally to the packing material.

The detailed description illustrates, by way of example, not by way of limitation, the principles of the invention. The description will clearly enable one skilled in the art to make and use the invention, and described several embodiments, adaptions, variations, alternatives and uses of the invention. As used herein, the terms "about" or "approximately" for any numerical values or ranges indicate a suitable dimensional tolerance that allows the part or collection of components to functions for its intended purpose as described.

### Brief Description of the Drawings

Figure 1. Scheme 1: Forming silicone-based polymer encapsulated silica substrate particles comprising pendant vinyl functional groups and Scheme 2: Forming functionalised silicone-based polymer encapsulated silica substrate particles.
Figure 2 shows the ion exchange test results obtained with CAD detector on ammonium chloride sample (A) packing material according to the present invention; (B) well - known C18 column (brand A).
Figure 3 shows the hydrolytic stability test results at pH 2 (0.1M TFA) and 50 °C temperature - (A) performance of packing material of the invention over 40 h of expose time; (B) remaining retention.
Figure 4 shows the LC-MS pattern of peptides derived from the amino acid sequence DIQMTQSPSTLSASVGDR featuring oxidation - (A) packing material of the present invention; (B) Conventional C4 column (brand A); (C) Conventional C18 column (brand A); (D) Charged surface hybrid (brand B).
Figure 5 shows the LC-MS pattern of peptides derived from the amino acid sequence GFYPSDIAVEWESNGQPENNYK featuring deamidation - (A) packing material of the present invention; (B) Conventional C4 column (brand A); (C) Conventional C18 column (brand A); (D) Charged surface hybrid (brand B).
Figure 6 shows the LC-MS pattern of peptides derived from the amino acid sequence EEQYNSTYR featuring N-glycation - (A) packing material of the present invention; (B) Conventional C4 column (brand A); (C) Conventional C18 column (brand A); (D) Charged surface hybrid (brand B).

In order to illustrate the present invention, the following non-limited examples of its practice are given below.

### Example 1 - Synthesis of the material for use as chromatography stationary phase material (Phase 1)

### 1.1 Preparation of vinyl functionalized silica (Step (a) (i) - Figure 1, Scheme 1)

20 g of dried Solid core porous spherical silica particles (dp, 2 µm; surface area, 75 m²/g; pore size, 160 Å) were transferred into a 250 - mL round bottom flask followed by the addition of a mixture of 7 g of vinylethoxysiloxane homopolymer (e.g.: Gelest) and 0.44 g of tetramethylethylenediamine (e.g.:Sigma-Aldrich) in toluene (60 mL). After carefully dispersing above slurry, the reaction mixture was put under stable refluxing under inert atmosphere and stirred for 48 h. The silica particles were filtered and thoroughly washed with acetone, acetone:water solution (1:1, v/v), acetonitrile:water solution (1:1, v/v), and followed by the mixture of 5 % formic acid and acetonitrile:water solution (1:1, v/v). After filtration and being washed with acetonitrile:water solution (1:1, v/v), acetone:water solution(1:1, v/v) and acetone, the resulting silica was dried under vacuum at 140 °C. for overnight. The dried silica was re-dissolved in 60 mL of toluene followed by the addition of 7 g of vinyldimethylethoxysilane (e.g.: Gelest) and 0.56 g of tetramethylethylenediamine (e.g.:Sigma-Aldrich). The resulting mixture was refluxed for 16 h. The functionalized silica particles were filtered and thoroughly washed with toluene, dioxane, methanol and acetone to give silicone-based polymer encapsulated substrate particles comprising pendant vinyl functional groups.

### 1.2 Preparation of polymer encapsulated silica phase (Phase 1) using free radical polymerization

### (Step (a) (ii) - Figure 1, Scheme 2):

12 mL of a dichloromethane was added to 10 g of vinyl functionalized silica, 2 g of 1 - octadecene (e.g.:Sigma-Aldrich), 0.5 g oleylamine (e.g.:Thermo Scientific), and 0.5 g of Dicumyl peroxide (e.g.:Sigma-Aldrich). The resulting mixture was sonicated until uniformity and then all volatiles were removed at reduced pressure with a rotary evaporator. Next, the resulting solvent-free mixture was transferred into the reactor, the reactor was sealed followed by flushing with an inert gas (e.g., nitrogen or argon) for 15 min, and heated to 160 ° C. After being kept at the same temperature for 16 h, the reaction was cooled down, and the reaction mixture was dispersed in heptane and sonicated for 15 min. After filtration, the cake was thoroughly washed with toluene, dioxane, methanol and acetone to give polymer encapsulated silica (phase 1).

### Example 2 - Synthesis of the material for use as chromatography stationary phase material (Phase 2).

### 1.1 Preparation of vinyl functionalized silica via solvent-free condition at elevated temperature

20 g of dried Solid core porous spherical silica particles (dp, 2 µm; surface area, 75 m²/g; pore size, 160 Å) were transferred into a 250 - mL round bottom flask followed by the addition of a mixture of 7 g of vinylethoxysiloxane homopolymer (e.g.: Gelest) in a suitable solvent (e.g. , dichloromethane). The resulting mixture was sonicated to uniformity and then all volatiles were completely removed under reduced pressure. The dried mixture was placed into the reactor equipped with heating and vacuum capacity. After placing a catalyst (e.g. ,0.5 g of tetramethylethylenediamine) into the reactor the reactor was sealed followed by flushing with an inert gas (e.g., nitrogen or argon) for 30 min. Next, the reactor was evacuated with a vacuum pump to a certain value (e.g. below100 mbar). The reactor was heated to a desired temperature (> 100 ° C.) and kept at the same temperature for at least 16 h. After cooling down, the silica particles were dispersed in toluene (100 - mL) and sonicated for 30 min. After filtration, the cake was washed with toluene and acetone. The resulting silica was dispersed in a mixture of 5 % acetic acid solution (CH3CN:H2O = 1:1, v/v) and allowed to stand for 12 h. After filtration and being washed with acetone, the resulting silica was dried under vacuum at 105 ° C. for 12 h. The dried silica was placed again into the reactor equipped with heating and vacuum capacity. After placing a catalyst (e.g., 0.5 g of tetramethylethylenediamine) and 7 g of vinyldimethylethoxysilane into the reactor, the reactor was sealed followed by flushing with an inert gas (e.g., nitrogen or argon) for 30 min. Next, the reactor was evacuated with a vacuum pump to a desired value (e.g. below 100 mbar). The reactor was heated to a desired temperature (> 100 ° C.) and kept at the same temperature for 16 h. After cooling down, the silica particles were dispersed in toluene (100 - mL) and sonicated for 30 min. After filtration, the cake was washed with toluene and acetone to give silicone-based polymer encapsulated substrate particles comprising pendant vinyl functional groups.

### 1.2 Preparation of polymer encapsulated silica phase (Phase 2) using free radical polymerization:

It was synthesized the same as described in Example 1 at 1.2 section.

### Example 3 - Separation of the negatively charged analyte (chloride ions) under different buffer concentrations.

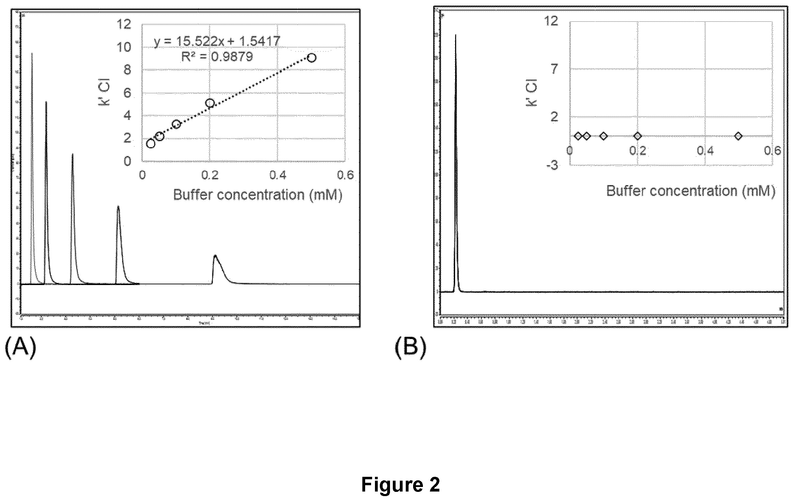

The Mixed-mode stationary phase as described in Example 1 was packed into a chromatographic column (150mm×2.1mm I.D.) and applied for separation of the negatively charged analyte (chloride ions) under different buffer concentrations. As shown in FIG. 2, the influence of ammonium formate concentration (counter-ion) on retention of negatively charged analyte, while maintaining the ACN content and pH of the mobile phase constant, on the Phase 1 (A) and Conventional C18 columns (B) is present. As expected, the retention for Conventional C18 column remain unaltered within the change in counter-ion concentration. The retention is affected when a mixed-mode retention mechanism is present (Phase 1). The retention factor of negatively charged analyte increased when the counter-ion buffer concentration increased indicating that this invention synthetic approach delivers a mixed-mode phase with ion-pairing property (anion exchange).
Column: 150 mmx2.1 mm I.D.
Mobile Phase: 100mM ammonium formate pH 3.0, Acetonitrile, DI water
Flow rate: 0.3 mL/min
Column temperature: 30 °C
Detector: Charged Aerosol Detector (CAD)
Example 4 - Hydrolytic stability test

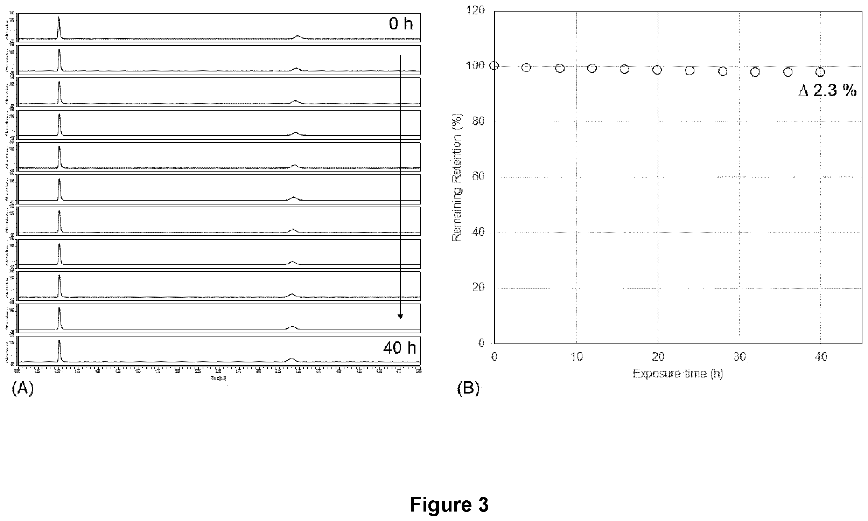

The Mixed-mode stationary Phase 1 as described in Example 1 was packed into a chromatographic column (50mmx4.6mm I.D.) and applied Hydrolytic stability test. The performance tests and low pH mobile phase treatment were repeated for 11 times (40 h in total). At 4 h intervals, the performance test was applied with sample containing acenaphthene (uracil as a void volume marker). As shown in FIG. 3, the acenaphthene retention during performance test decrease only 2.3 % over 40 h of acidic condition treatment, indicating that mixed-mode stationary Phase 1 is highly stable under acidic conditions.
Column: 50 mmx4.6 mm I.D.
Mobile Phases: Hydrolytic stability test - 0.1% TFA (aqueous), Column performance test - 50 % ACN, 50% 0.01M ammonium acetate pH 5.0
Flow rate: 0.4 mL/min
Column temperature: 50 °C
Detector: UV 254 nm

### Example 5 - Oxidised peptide separations.

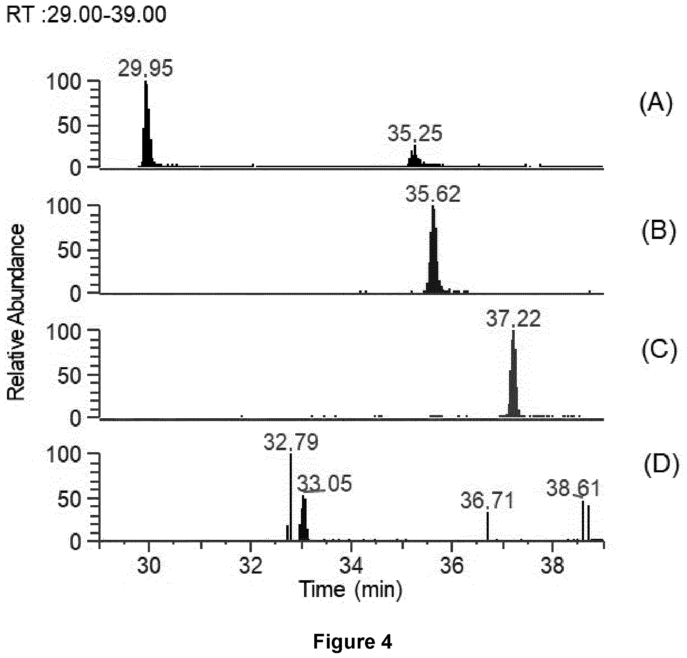

The Mixed-mode stationary Phase 1 as described in Example 1 was packed into a chromatographic column (150mm×2.1mm I.D.) and applied for analysis of post-translationally modified peptides. Figure 4 shows the LC-MS pattern of peptides derived from the amino acid sequence DIQMTQSPSTLSASVGDR featuring oxidation - (A) packing material of the present invention; (B) Conventional C4 column (brand A); (C) Conventional C18 column (brand A); (D) Charged surface hybrid (brand B). The same sample of NISTmAb tryptic digest containing oxidated peptide, having the DIQMTQSPSTLSASVGDR amino acid sequence, was analysed. Packing material of the present invention shows peak shape of the oxidised peptide and separation from interfering peaks comparable to non-mixed-mode stationary phases, which is advantageous because oxidised peptides commonly have poor peak shapes with mixed-mode stationary phases.

The test conditions were: column, packing material of the present invention: 150 mmx2.1 mm I.D.;mobile phases: ultrapure water containing 0.1% formic acid and acetonitrile containing 0.1% formic acid, flow rate, 0.4 mL/min; column temperature: 50 °C; detector: High resolution mass spectrometer; sample: NISTmAb digest; injection volume: 8 µL.

### Example 6 - Deamidated peptide separations.

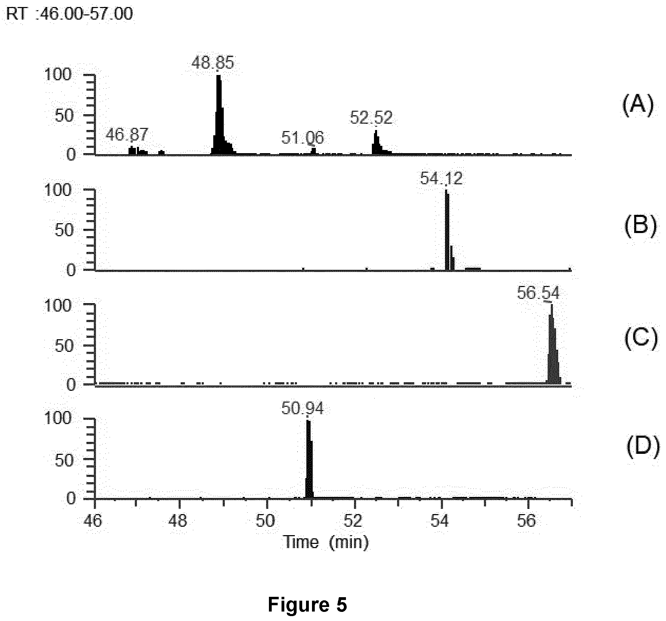

The Mixed-mode stationary Phase 1 as described in Example 1 was packed into a chromatographic column (150mm×2.1mm I.D.) and applied for analysis of post-translationally modified peptides. Figure 5 shows the LC-MS pattern of peptides derived from the amino acid sequence GFYPSDIAVEWESNGQPENNYK featuring deamidation - (A) packing material of the present invention; (B) Conventional C4 column (brand A); (C) Conventional C18 column (brand A); (D) Charged surface hybrid (brand B). The same sample of NISTmAb tryptic digest containing deamidated peptides, having the GFYPSDIAVEWESNGQPENNYK amino acid sequence, was analysed. Multiple deamidated peaks are expected due to the glutamine and multiple asparagine amino acids in the peptide having potential for deamidation. Packing material of the present invention shows separation of multiple peptide peaks having a single deamidation, which is advantageous for detailed analysis of post-translationally modified peptides.

The test conditions were: column, packing material of the present invention: 150 mmx2.1 mm I.D.;mobile phases: ultrapure water containing 0.1% formic acid and acetonitrile containing 0.1% formic acid, flow rate, 0.4 mL/min; column temperature: 50 °C; detector: High resolution mass spectrometer; sample: NISTmAb digest; injection volume: 8 µL.

### Example 7 - Aminoglycoside peptide separations.

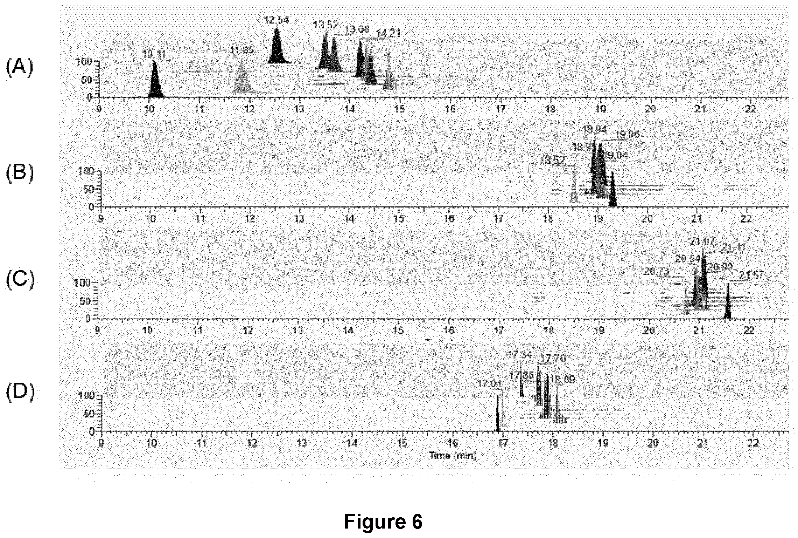

The Mixed-mode stationary Phase 1 as described in Example 1 was packed into a chromatographic column (150mm×2.1mm I.D.) and applied for analysis of post-translationally modified peptides. Figure 6 shows the LC-MS pattern of peptides derived from the amino acid sequence EEQYNSTYR featuring N-glycation - (A) packing material of the present invention; (B) Conventional C4 column (brand A); (C) Conventional C18 column (brand A); (D) Charged surface hybrid (brand B). The same sample of NISTmAb tryptic digest containing glycosylated peptides, having the EEQYNSTYR amino acid sequence, was analysed. Multiple N-linked glycan peptide peaks are expected due to the different types of glycan linked to the peptide. Packing material of the present invention shows superior separation of multiple glycosylated peptide peaks, which is advantageous for detailed analysis of glycosylated peptides. The chromatographic resolution of these peaks is critical to successful identification by fragmentation spectra as multiple coeluting glycan species can interfere with each other by producing unintended fragmentation in the ion source and reducing intensities of spectral peaks, thus the packing material of the present invention is advantageous for reducing interference among glycoforms of peptides.

The test conditions were: column, packing material of the present invention: 150 mmx2.1 mm I.D.;mobile phases: ultrapure water containing 0.1% formic acid and acetonitrile containing 0.1% formic acid, flow rate, 0.4 mL/min; column temperature: 50 °C; detector: High resolution mass spectrometer; sample: NISTmAb digest; injection volume: 8 µL.

## Claims

1. A method for making chromatographic packing material, wherein the packing material comprises a functionalised silicone-based polymer layer bonded to substrate particles and the method for forming the packing material comprises:
(a)
(i) forming silicone-based polymer encapsulated substrate particles comprising pendant functional groups by reacting functional groups on the substrate particles with a silicone-based polymer product comprising pendant functional groups; and
(ii) functionalising the silicone-based polymer encapsulated substrate particles by reacting the pendant functional groups on the silicone-based polymer encapsulated substrate particles with at least one hydrophobic compound and at least one amine containing compound; or
(b)
(i) forming a functionalised silicone-based polymer by reacting pendant functional groups on a silicone-based polymer product with at least one hydrophobic compound and at least one amine containing compound; and
(ii) reacting the product of step b (i) with functional groups on the substrate particles.

2. The method according to claim 1, wherein the functional groups on the substrate particles are selected from hydroxyl, epoxy and thiol.

3. The method according to claim 1 or 2, wherein the substrate particles are selected from the group consisting of metal oxides and organic polymers.

4. The method according to any one of the preceding claims, wherein the pendant functional groups on the silicone-based polymer encapsulated substrate particles or the silicone-based polymer product are reactive olefinic groups or reactive thiol groups, preferably olefinic groups.

5. The method according to any one of the preceding claims, wherein the silicone-based polymer product comprises at least one leaving group, preferably an alkoxy leaving group.

6. The method according to any one of the preceding claims, wherein the silicone-based polymer product comprises vinylsiloxane.

7. The method according to any one of the preceding claims, wherein the at least one hydrophobic compound is a C₄ to C₃₀ alkyl.

8. The method according to any one of the preceding claims, wherein the at least one amine containing compound is a C₄ to C₃₀ alkyl substituted with at least one amino group selected from ammonia, primary amine, secondary amine, tertiary amine and quaternary amine groups.

9. The method according to any one of the preceding claims, wherein the reaction between the pendant functional groups on the silicone-based polymer encapsulated substrate particles in step (a) (ii) and the at least one hydrophobic compound and at least one amine containing compound forms an additional polymer layer bonded to the silicone-based polymer encapsulated substrate particles.

10. The method according to any one of claims 1 to 8, wherein the reaction between the pendant functional groups on the silicone-based polymer product in step (b) (i) and the at least one hydrophobic compound and at least one amine containing compound forms an additional polymer layer bonded to the silicone-based polymer product.

11. A method according to any one of the preceding claims, wherein in step (a) (ii) or step (b) (i) the ratio of the at least one hydrophobic compound and the at least one amine containing compound is from about 0:1 to about 50:1.

12. The method of any one of the preceding claims wherein the packing material is provided in a form suitable for use as chromatographic packing.

13. A chromatographic packing material formed by the method of any one of the preceding claims.

14. A chromatographic packing material comprising:
(i) Substrate particles;
(ii) A functionalised silicone-based polymer bonded to the substrate particles prepared by:
(a)
(i) forming silicone-based polymer encapsulated substrate particles comprising pendant functional groups by reacting functional groups on the substrate particles with a silicone-based polymer product comprising pendant functional groups; and
(ii) functionalising the silicone-based polymer encapsulated substrate particles by reacting the pendant functional groups on the silicone-based polymer encapsulated substrate particles with at least one hydrophobic compound and at least one amine containing compound; or
(b)
(i) forming a functionalised silicone-based polymer by reacting pendant functional groups on a silicone-based polymer product with at least one hydrophobic compound and at least one amine containing compound; and
(ii) reacting the product of step b (i) with functional groups on the substrate particles.

15. The chromatographic packing according to claim 14, wherein the functional groups on the substrate particles are selected from hydroxyl, epoxy and thiol.

16. The chromatographic packing according to claim 14 or 15, wherein the substrate particles are selected from the group consisting of metal oxides and organic polymers.

17. The chromatographic packing according to any one of claims 14 to 16, wherein the pendant functional groups on the silicone-based polymer encapsulated substrate particles or the silicone-based polymer are reactive olefinic groups or reactive thiol groups, preferably olefinic groups.

18. The chromatographic packing according to any one of claims 14 to 17, wherein the silicone-based polymer product comprises at least one leaving group, preferably an alkoxy group.

19. The chromatographic packing according to any one of claims 14 to 18, wherein the silicone-based polymer product comprises vinylsiloxane.

20. The chromatographic packing according to any one of claims 14 to 19, wherein the at least one hydrophobic compound is a C₄ to C₃₀ alkyl.

21. The chromatographic packing according to any one of claims 14 to 20, wherein the at least one amine containing compound is a C₄ to C₃₀ alkyl substituted with at least one amino group selected from ammonia, primary amine, secondary amine, tertiary amine and quaternary amine groups.

22. The chromatographic packing according to any one of claims 14 to 21, wherein the reaction between the pendant functional groups on the silicone-based polymer encapsulated substrate particles in step (a) (ii) and the at least one hydrophobic compound and at least one amine containing compound forms an additional polymer layer bonded to the silicone-based polymer encapsulated substrate particles.

23. The chromatographic packing according to any one of claims 14 to 21, wherein the reaction between the pendant functional groups on the silicone-based polymer product in step (b) (i) and the at least one hydrophobic compound and at least one amine containing compound forms an additional polymer layer bonded to the silicone-based polymer product.

24. A chromatographic packing according to any one of claims 14 to 23, wherein the ratio of the at least one hydrophobic compound and the at least one amine containing compound is from about 0:1 to about 50:1.

25. The packing material according to any one of claims 14 to 24, wherein the packing is obtained using a method as defined in any one of claims 1 to 19.

26. The use of packing material according to any one of claims 14 to 24 in chromatographic separation, preferably the separation of glycopeptides.

27. The use according to claim 26, wherein the chromatographic separation is conducted using a mobile phase with a pH 1.0 or less or a pH of 13.0 or more.

28. A chromatographic separation device comprising the packing material according to any one of claims 14 to 25.
